# FASCICULE DE BREVET EUROPEEN

(11) **EP 3 580 430 B1**
(45) Date de publication et mention de la délivrance du brevet: **15.07.2026**
(21) Numéro de dépôt: 18706789.7
(22) Date de dépôt: 05.02.2018
(51) Int. Cl.: F01D 5/18

(54) **AUBE VENTILÉE DE TURBINE HAUTE PRESSION**
GEKÜHLTE HOCHDRUCKTURBINENSCHAUFEL
COOLED HIGH PRESSURE TURBINE BLADE

(30) Priorité: 07.02.2017 FR 1751006
(43) Date de publication de la demande: 18.12.2019
(73) Titulaire: Safran Helicopter Engines, 64510 Bordes (FR)
(72) Inventeur: MARTINEAU, Gontran, 77550 Moissy-Cramayel (FR); PARDO, Frédéric Philippe Jean-Jacques, 77550 Moissy-Cramayel (FR); PILETTE, Kévin, 77550 Moissy-Cramayel (FR); SAHORES, Jean-Luc Pierre, 77550 Moissy-Cramayel (FR); CARBON, Julien, 77550 Moissy-Cramayel (FR)
(74) Mandataire: Santarelli
(86) Numéro de dépôt international: PCT/FR2018/050273
(87) Numéro de publication internationale: WO 2018/146403

(56) Documents cités:
- EP-A1- 0 034 961
- EP-A1- 1 503 038
- EP-A1- 2 037 081
- US-A1- 2009 297 361

## Description

### DOMAINE TECHNIQUE

La présente invention se rapporte à une aube haute pression de turbomachine, telle qu'un turbomoteur d'hélicoptère.

### ÉTAT DE LA TECHNIQUE ANTÉRIEURE

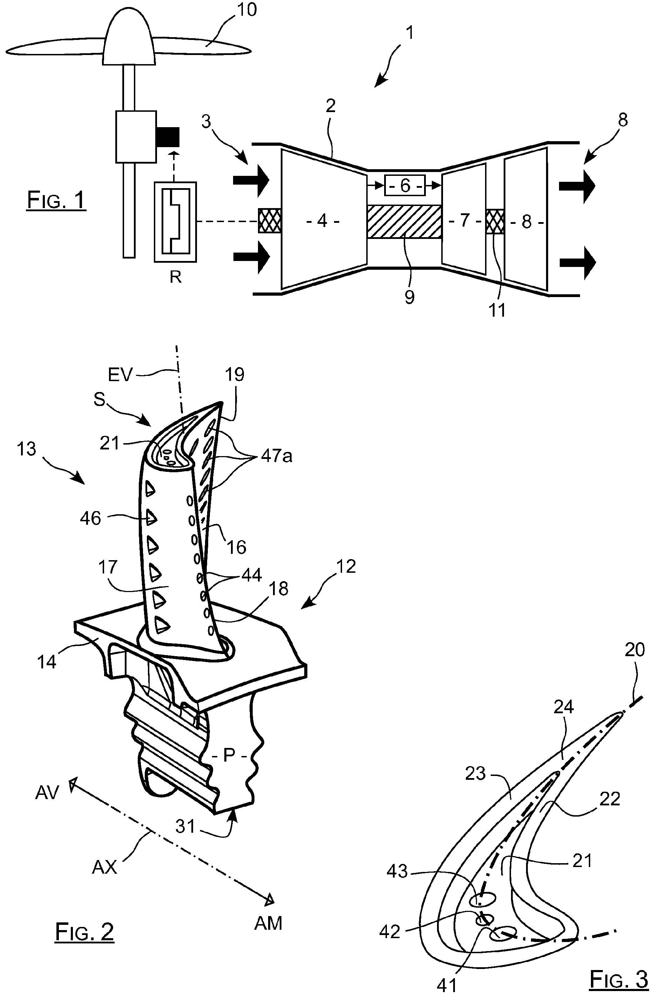

L'architecture d'un turbomoteur d'hélicoptère se décline en différentes configurations comme la configuration représentée sur la figure 1 avec une turbine dite libre qui entraîne, par l'intermédiaire d'un réducteur, des rotors de l'hélicoptère.

Dans un tel moteur repéré par 1 qui est délimité par un carter externe 2, l'air extérieur est admis dans une manche d'entrée 3, et se comprime en traversant un compresseur 4 avant d'arriver dans une chambre de combustion 6. En sortie de chambre de combustion 6, l'air se détend en traversant une première turbine 7, appelée turbine haute pression, puis une seconde turbine 8, appelée turbine basse pression, avant d'être rejeté hors du moteur par un conduit d'évacuation 8.

L'énergie cinétique des gaz chauds en sortie de chambre de combustion 6 est alors transformée en énergie mécanique en traversant les turbines 7 et 8 qu'elle met en mouvement.

Chaque turbine 7 et 8 comprend une succession d'étages comportant chacun une série d'aubes régulièrement espacées autour d'un arbre de rotation respectif. La turbine haute pression 7 est reliée à un arbre 9 du moteur 1 et sur lequel est monté le compresseur 4, la rotation de cette turbine haute pression 7 entrainant le compresseur 4 dans son mouvement. La turbine basse pression 8, ou libre, est reliée à un arbre 11 passant à l'intérieur de l'arbre 9 pour entrainer les rotors de l'hélicoptère 10 par l'intermédiaire d'un ensemble réducteur R sur la figure 1.

D'une manière générale, les aubes de turbine qui sont soumises aux conditions les plus sévères sont celles de la turbine haute pression quelle que soit la configuration du turbomoteur, à savoir au niveau des étages les plus proches de la chambre de combustion.

En pratique, les besoins accrus en performances des turbomoteurs impliquent d'améliorer la tenue des aubes de turbine haute pression en particulier en ce qui concerne leur tenue en température, avec des températures attendues en sortie de la chambre de combustion qui sont toujours en augmentation.

Cette situation conduit à reconsidérer le refroidissement des aubes afin qu'elles puissent supporter ces nouvelles conditions de fonctionnement, la température des gaz de combustion étant largement supérieure à la température de fusion des matériaux constituants ces aubes.

Ce refroidissement est assuré en faisant circuler à l'intérieur des aubes de l'air frais qui est prélevé dans le turboréacteur en amont de la combustion. Cet air est admis en pied d'aube, pour cheminer le long d'un circuit interne de l'aube afin de la refroidir, et il est évacué hors de l'aube par des perçages traversant les parois de cette aube et répartis sur ces parois. Ces perçages servent à évacuer l'air de refroidissement, et à créer à la surface externe de l'aube un film d'air plus froid que l'air issu de la combustion, ce qui contribue aussi à limiter la température de l'aube.

Le but de l'invention est de proposer une structure d'aube permettant d'améliorer l'efficacité de refroidissement tout en présentant un coût de fabrication réduit. Le document EP0034961A1 divulgue une aube selon le préambule de la revendication 1.

### EXPOSÉ DE L'INVENTION

A cet effet, l'invention a pour objet une aube de turbine haute pression d'une turbomachine selon la revendication 1. Entre autres, cette aube comporte :
- une pale s'étendant selon une direction d'envergure en se terminant par un sommet et comprenant une paroi d'intrados et une paroi d'extrados réunies en amont par un bord d'attaque et réunies en aval par un bord de fuite,
- un circuit interne de refroidissement comprenant uniquement un conduit amont et une cavité centrale pour refroidir cette aube par circulation d'air ;
- le conduit amont et la cavité centrale étant alimentés en air de manière distincte ;
- le conduit amont étant dédié au refroidissement du bord d'attaque et de la paroi d'extrados ;
- la cavité centrale étant dédiée au refroidissement de la paroi d'intrados et du bord de fuite et étant pourvue de pontets reliant chacun la paroi d'intrados à la paroi d'extrados.

Avec cette solution, l'aube présente un circuit interne de refroidissement à la fois simple et efficace, de sorte que le taux de rebut lors de l'étape de fabrication de fonderie est diminué, ce qui permet de réduire le coût de fabrication. Cette aube, qui est pourvue d'un conduit amont et d'une cavité centrale indépendants et dédiés chacun au refroidissement spécifique de parties distinctes et complémentaires de cette aube, présente une efficacité de ventilation optimisée au juste besoin.

En effet, ce partage des rôles entre le conduit et la cavité permet de changer le refroidissement de la paroi d'extrados et/ou du bord d'attaque, sans altérer le refroidissement de la paroi d'intrados et/ou du bord de fuite. Le conduit et la cavité étant séparés par une unique paroi de séparation, un simple remaniement de cette paroi permet de modifier l'ensemble du refroidissement de la pale, en décalant par exemple cette paroi de séparation pour changer le débit.

Selon l'invention, l'aube comporte un pied prolongé par une plateforme portant la pale, dans laquelle le conduit amont et la cavité centrale sont alimentés par deux embouchures de mêmes sections situées en face inférieure du pied, dans laquelle le conduit amont rétrécit depuis son embouchure jusqu'à la plateforme, et dans laquelle la cavité centrale s'élargit depuis son embouchure jusqu'à la plateforme.

L'invention concerne également une aube ainsi définie, comportant une série de trous de refroidissement de son bord de fuite à section circulaire, chaque trou reliant la cavité centrale avec l'extérieur en traversant la paroi d'intrados, en s'étendant depuis une entrée en face intérieure de la paroi d'intrados jusqu'à une sortie en face externe de la paroi d'intrados.

L'invention concerne également une aube ainsi définie, dans laquelle chaque trou de refroidissement du bord de fuite est incliné de telle manière que sa sortie est décalée à la fois vers le sommet et vers le bord de fuite par rapport à son entrée.

L'invention concerne également une aube ainsi définie, dans laquelle chaque trou de refroidissement du bord de fuite a une inclinaison qui est d'autant plus importante qu'il est proche de ce sommet.

L'invention concerne également une aube ainsi définie, dans laquelle le bord d'attaque comporte une série de trous qui relient chacun le conduit amont avec l'extérieur, chaque trou de refroidissement du bord d'attaque étant incliné en comportant une sortie située en face externe du bord d'attaque qui est plus proche du sommet que son entrée située en face interne du bord d'attaque.

L'invention concerne également une aube ainsi définie, dans laquelle chaque trou de refroidissement du bord d'attaque présente une inclinaison qui est d'autant plus importante qu'il est proche du sommet.

L'invention concerne également une aube ainsi définie, dans laquelle la paroi d'extrados comporte une série de trous de refroidissement de l'extrados ayant chacun une section qui augmente depuis son entrée située en face intérieure de la paroi d'extrados jusqu'à sa sortie située en face externe de cette paroi d'extrados.

L'invention concerne également une aube ainsi définie, dans laquelle chaque trou de refroidissement de la paroi d'extrados a une section moyenne d'autant plus importante qu'il est éloigné du sommet.

L'invention concerne également une turbine comprenant une aube ainsi définie.

L'invention concerne également un hélicoptère comprenant une turbine ainsi définie.

### BRÈVE DESCRIPTION DES DESSINS

La figure 1 déjà décrite est un schéma de principe d'un turbomoteur en simple corps avec turbine libre en coupe longitudinale ;
La figure 2 est une vue en perspective d'une aube de turbine haute pression selon l'invention ;
La figure 3 est une est une vue de détail du sommet de l'aube selon l'invention ;
La figure 4 est une est une vue latérale montrant la paroi d'intrados en face externe de l'aube selon l'invention ;
La figure 5 est une est une vue latérale montrant le circuit de refroidissement interne à travers la paroi d'intrados de l'aube selon l'invention ;
La figure 6 est une est une vue de détail du conduit amont et de la cavité centrale du circuit de refroidissement interne à travers la paroi d'intrados de l'aube selon l'invention ;
La figure 7 est une vue latérale montrant dans sa globalité l'aube selon l'invention.

### EXPOSÉ DÉTAILLÉ DE MODES DE RÉALISATION PARTICULIERS

L'aube selon l'invention, repérée par 12 sur la figure 2, comprend un pied P par lequel elle est fixée à un corps rotatif non représenté qui est appelé disque de turbine dont un axe de rotation AX correspond à la direction d'avancement du moteur équipé d'un tel disque, ou encore à la direction longitudinale du pied P. Cette aube comprend également une pale 13 portée par le pied P et une plateforme 14 qui raccorde le pied P à la pale 13.

Le pied P présente, selon un plan de coupe normal à l'axe AX, un contour en forme de sapin qui permet à l'aube 12 de s'engager dans une encoche correspondante du disque de turbine.

Conçue en fonction de la direction d'arrivée des gaz de combustion, la pale 13 s'étend selon un profil cambré depuis le pied P jusqu'à un sommet S en se vrillant autour d'un axe dit d'envergure EV qui est perpendiculaire à l'axe AX.

Cette pale 13 comporte une paroi d'intrados 16 et une paroi d'extrados 17 qui sont espacées l'une de l'autre de part et d'autre d'une ligne médiane du profil de l'aube, appelé également squelette 20 illustré sur la figure 3. Cette paroi d'intrados 16 et d'extrados 17 sont réunies en une première extrémité du squelette 20 situé dans une région amont AM de la pale par un bord d'attaque 18 et en une seconde extrémité du squelette 20 situé dans une région aval AV de la pale par un bord de fuite 19.

La paroi d'intrados 16 et la paroi d'extrados 17 ainsi que les bords d'attaque 18 et de fuite 19 ont des formes courbes qui s'étendent sensiblement parallèlement à la direction d'envergure EV. Complémentairement, une paroi de fermeture 21 raccorde la paroi d'intrados 16 à la paroi d'extrados 17 perpendiculairement à l'axe EV dans la région du sommet S. La paroi d'intrados 16 et la paroi d'extrados 17 s'étendent au-delà de la paroi de fermeture 21 dont elles dépassent en constituant respectivement un bord amont 22 et un bord aval 23 visibles sur la figure 3. Ces deux bords 22 et 23 forment conjointement une bordure périphérique 24 qui délimite une baignoire dont le fond est la paroi de fermeture 21.

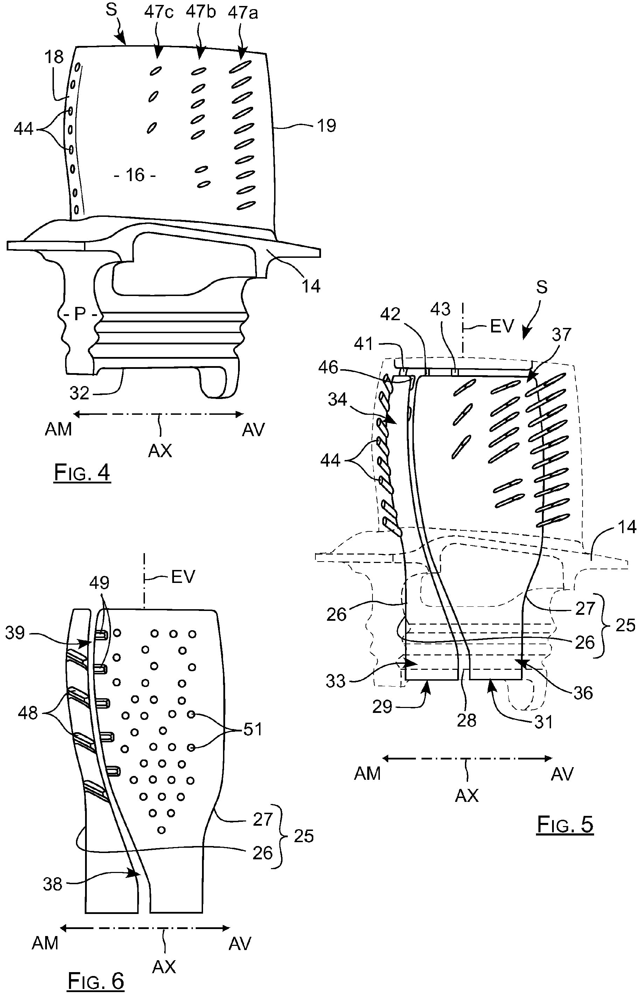

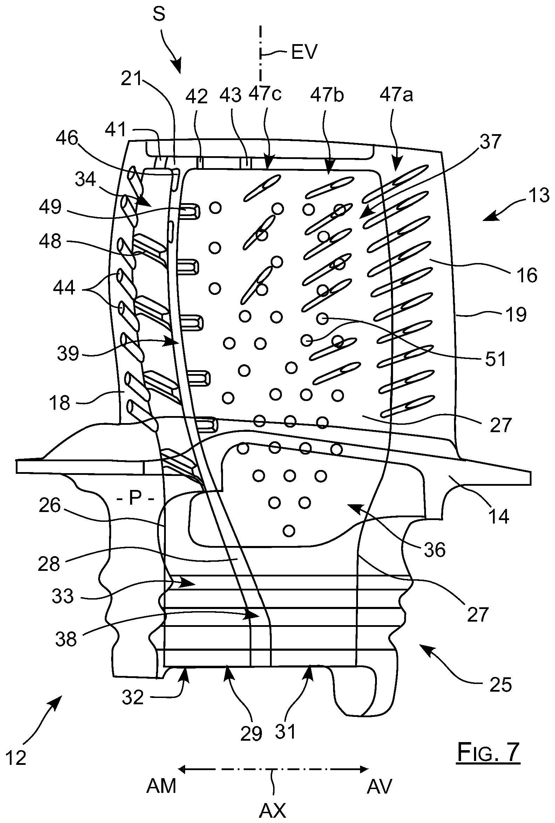

Cette aube 12 est une pièce monobloc fabriquée par fonderie d'un alliage métallique, en utilisant un ensemble d'éléments de noyau solidarisés les uns aux autres pour délimiter un circuit interne de refroidissement 25 incluant un conduit amont 26 et une cavité centrale 27, visibles sur les figures 5, 6 et 7, qui sont isolés l'un de l'autre par une paroi de séparation 28. Cet ensemble d'éléments de noyau est communément retiré après coulée et refroidissement, par processus d'attaques chimiques.

En conditions de fonctionnement, le refroidissement de l'aube 12 est assuré en faisant circuler de l'air frais à l'intérieur de ce circuit interne de refroidissement 25. Cet air frais est admis par deux embouchures de mêmes sections comprenant plus particulièrement une embouchure 29 du conduit amont 26 et une embouchure 31 de la cavité centrale 27, ces embouchures 29 et 31 étant formées au travers d'une face inférieure 32 du pied P, et rejeté par des trous traversant les parois qui délimitent la pale 13.

Le conduit amont 26 a une forme tubulaire qui s'étend depuis la face inférieure 32, pour y collecter de l'air à son embouchure 29, jusqu'à la paroi de fermeture 21. Il est dédié au refroidissement du bord d'attaque et de la paroi d'extrados 17.

Ce conduit 26 comprend une portion inférieure 33 qui s'étend depuis la face inférieure 32 jusqu'à la plateforme 14, et une portion supérieure 34 qui s'étend depuis la plateforme 14 jusqu'à la paroi de fermeture 21.

La portion inférieure 33 est un volume évidé dans le pied P qui est délimité par une paroi amont du pied P s'étendant selon un plan normal à l'axe AX, par deux parois latérales du pied P, et par la paroi de séparation 28. Cette portion inférieure 33 présente une section ayant une aire sensiblement constante depuis la face inférieure 32 le long d'environ un sixième de la hauteur du pied P, puis qui diminue jusqu'à la plateforme 14.

La portion supérieure 34 est un volume évidé dans la pale 13 qui, depuis la plateforme 14 jusqu'à la paroi de fermeture 21, conserve un écart constant avec la face externe du bord d'attaque 18 dont elle suit la courbure. Cette portion supérieure 34 présente une section dont l'aire est sensiblement constante.

La cavité centrale 27 dédiée au refroidissement de la paroi d'intrados 16 et du bord de fuite 19 a une forme ayant, en vue latérale selon un axe perpendiculaire à la fois à l'axe AX et à l'axe EV, un contour se rapprochant de celui d'un «hachoir». Cette cavité centrale 27 s'étend globalement selon une direction parallèle à la direction EV depuis la face inférieure 32, pour y collecter de l'air à son embouchure 31 jusqu'à la paroi de fermeture 21.

De manière analogue au conduit 26, cette cavité 27 comprend une portion inférieure 36 qui s'étend depuis la face inférieure 32 jusqu'à la plateforme 14, et une portion supérieure 37 qui s'étend depuis la plateforme 14 jusqu'à la paroi de fermeture 21.

La portion inférieure 36 est un volume évidé dans le pied P qui est délimité par une paroi aval du pied P s'étendant selon un plan normal à l'axe AX, par deux parois latérales de ce pied P, et par la paroi de séparation 28.

La portion inférieure 36 présente une section dont l'aire augmente depuis la face inférieure 32 jusqu'au niveau de la moitié du pied P, puis s'élargit davantage encore jusqu'à la plateforme 14 en suivant la paroi aval du pied P qui inclut une rampe orientée vers l'aval de l'aube 12 de sensiblement 20° par rapport à l'axe EV.

La portion supérieure 37 est un volume évidé dans la pale 13 qui est délimité par une portion supérieure 39 de la paroi de séparation 28 et par les parois d'intrados 16 et d'extrados 17 qui se rejoignent au bord de fuite 19.

Comme visible notamment sur les figures 5 à 7, la portion supérieure 37 de la cavité centrale présente en vue latérale, c'est-à-dire perpendiculairement aux axes AX et EV, une forme ayant un contour convexe, c'est-à-dire sans méandre pour s'étendre continûment d'un seul tenant depuis sa partie amont jusqu'à sa partie aval.

La paroi de séparation 28 s'étend depuis une région centrale de la face inférieure 32 jusqu'à une région amont de la paroi de fermeture 21, la paroi de fermeture 21 pouvant être scindée en une moitié amont et une moitié aval.

D'une manière générale, le squelette 20 peut être scindé en une moitié amont et une moitié aval séparées l'une de l'autre par une ligne médiane du squelette située à mi-distance entre le bord d'attaque 18 et le bord de fuite 19. Les moitiés amont et aval de la paroi de fermeture 21 sont ainsi les parties de cette paroi de fermeture situées en amont et en aval de cette ligne médiane.

Comme visible sur la figure 5, la paroi de séparation 28 rejoint la paroi de fermeture 21 dans une région qui est plus proche du bord d'attaque 18, qu'elle ne l'est de la ligne médiane du squelette 20. Autrement dit, la paroi de séparation 28 rejoint la paroi de fermeture 21 au niveau du quart amont de cette paroi de fermeture 21.

Comme il ressort des figures 5 et 6, la cavité centrale 27 présente ainsi un volume très supérieur à celui du conduit amont 26, compte tenu de la proximité de la paroi de séparation 28 avec le bord d'attaque 18.

Concrètement, le conduit amont 26 rétrécit depuis son embouchure 29 jusqu'à la plateforme 14 tandis que la cavité centrale 27 s'élargit depuis son embouchure 31 jusqu'à la plateforme 14. Pour toute coupe de la pale 13 perpendiculairement à l'axe EV, le conduit amont 26 présente une section dont l'aire est inférieure ou égale au quart de l'aire de la section de la cavité centrale 27.

La paroi de séparation 28 comporte une portion inférieure 38 s'étendant dans le pied P, prolongée par une portion supérieure 39 s'étendant dans la pale 13.

La portion inférieure 38 s'étend depuis le milieu de la face inférieure 32 jusqu'à la plateforme 14 selon la direction EV le long d'environ un sixième de la hauteur du pied P. Pour toute coupe du pied P perpendiculairement à l'axe EV depuis la face inférieure 32 jusqu'au sixième de la hauteur du pied P, l'embouchure 29 du conduit amont 26 présente une section dont l'aire est égale à l'aire de la section de l'embouchure 31 de la cavité centrale 27.

Au-delà du sixième de la hauteur du pied P, cette portion inférieure 38 s'étend jusqu'à la plateforme 14 selon une direction oblique orientée à la fois vers le sommet S et vers le bord d'attaque 18 en formant une rampe vers l'amont de l'aube 12.

La portion supérieure 39 s'étend dans la pale 13 depuis la plateforme 14 jusqu'à une partie très amont de la paroi de fermeture 21. En vue latérale selon un axe perpendiculaire aux axes AX et EV, la portion supérieure 39 est incurvée, en étant à distance constante du bord d'attaque 18.

La paroi de fermeture 21 comporte trois trous de dépoussiérage 41, 42 et 43 visibles en figures 3 et 5, qui sont répartis le long de la moitié amont du squelette 20 et s'étendant parallèlement à l'axe EV.

Le premier trou 41 est le plus proche du bord d'attaque 18 et relie le conduit amont 26 à l'extérieur au niveau du sommet S. Le troisième trou 43 est le plus proche de la ligne médiane du squelette 20 et relie la cavité centrale 27 avec l'extérieur au niveau du sommet S. Le premier et le troisième trou 41 et 43 ont des sections courantes équivalentes.

Le second trou 42, qui s'étend à équidistance du premier 41 et du troisième trou 43 relie la cavité centrale 27 avec l'extérieur au niveau du sommet S, il présente un diamètre inférieur aux diamètres du premier et du troisième trou 41 et 43.

En pratique, le noyau utilisé pour fabriquer cette aube 12 comprend un premier élément de noyau solidarisé à un second élément de noyau, qui délimitent respectivement le conduit amont 26 et la cavité centrale 27. Ces deux éléments de noyau sont reliés l'un et l'autre à un élément de noyau additionnel délimitant la baignoire, par des tiges d'alumine traversant la paroi de fermeture 21.

Après une première attaque chimique permettant de retirer les éléments de noyaux, les tiges de liaison sont retirées avec une seconde attaque chimique pour délimiter les trous 41, 42 et 43.

En fonctionnement, l'air admis en manche d'entrée 3 d'un turbomoteur contient diverses poussières et particules qui peuvent être aspirées par les embouchures 29 et 31 du circuit de refroidissement de l'aube 12. Les trous 41, 42 et 43 permettent d'évacuer ces poussières et particules.

Cette aube 12 comporte une série de huit trous 44 de refroidissement de son bord d'attaque 18, qui relient chacun la portion supérieure 34 du conduit amont 26 avec l'extérieur. En vue latérale selon un axe perpendiculaire à la fois à l'axe AX et à l'axe EV, chaque trou 44 est incliné par rapport à l'axe EV de telle manière qu'il comporte une sortie, située en face externe de ce bord d'attaque 18, qui est plus proche du sommet S et de l'amont de l'aube 12 que son entrée, située en face interne du bord d'attaque 18.

Chaque trou 44 a une inclinaison par rapport à l'axe EV qui est d'autant plus importante qu'il est éloigné du sommet S. Le long de la cambrure du conduit 26 qui est sensiblement la même que celle du bord d'attaque 18, l'angle formé, entre chaque trou 44 et la portion de paroi du bord d'attaque 18 qu'il traverse, est le même.

Concrètement, le trou 44 le plus proche de la plateforme 14 présente une inclinaison par rapport à l'axe EV qui est la plus grande, et le trou 44 le plus proche du sommet S présente une inclinaison par rapport à l'axe EV qui est la plus faible.

Cette aube 12 comporte également une série de six trous 46 de refroidissement de sa paroi d'extrados 17 régulièrement espacés selon l'axe EV pour transférer de l'air frais issus de la portion supérieure 34 du conduit 26 vers la face externe de la paroi d'extrados 17. Chaque trou 46 a une section triangulaire à sommets arrondis dont l'aire augmente depuis son entrée située en face intérieure de la paroi d'extrados 17 jusqu'à sa sortie située en face externe de cette paroi d'extrados 17. Chacun des trous 46 a ainsi une forme de tronc de pyramide à base triangulaire irrégulière, i.e. formée par trois faces latérales d'aires inégales.

Chaque trou 46 comporte une face latérale de plus grande superficie qui forme une rampe pour que le flux d'air frais épouse la paroi d'extrados 17, cette face latérale de plus grande superficie intersectant la face extérieure de la paroi d'extrados 17 en formant un segment sensiblement parallèle à l'axe EV.

Chaque trou 46 a une section d'autant plus importante qu'il est éloigné du sommet S : le volume du trou le plus proche de la plateforme 14 est le plus grand, et le volume du trou le plus proche du sommet S est le plus petit.

Chaque trou 46 a une section moyenne, c'est-à-dire un volume, d'autant plus importante qu'il est éloigné du sommet (S).

Cette aube 12 comporte encore une première, une seconde, et une troisième série de trous 47a, 47b et 47c de refroidissement de la paroi d'intrados 16 et du bord de fuite 19 qui relient chacun la portion supérieure 37 de la cavité centrale 27 à l'extérieur, comme visible en figure 5.

Les trous 47a de la première série sont distribués le long d'une première ligne parallèle à l'axe EV, ils sont au nombre de dix, et ils sont les plus proches du bord de fuite 19 dont ils assurent le refroidissement.

De la même manière, les trous 47b de la seconde série sont répartis le long d'une seconde ligne parallèle à l'axe EV, et ils sont au nombre de sept. Enfin, les trous 47c de la troisième série sont au nombre de trois, et ils sont répartis le long d'une troisième ligne parallèle à l'axe EV en étant les plus éloignés du bord de fuite 19 pour refroidir la paroi d'intrados 16.

La première ligne formée par la série de trous 47a et la troisième ligne formée par la troisième série de trous 47c sont à équidistance chacune de la deuxième ligne formée par la deuxième série de trous 47b.

D'une manière générale, les trous 47a, 47b et 47c assurent le refroidissement de la face externe de la paroi d'intrados 16 où ils forment un film d'air de refroidissement qui permet de protéger efficacement la paroi d'intrados 16 jusqu'à son bord de fuite 19 inclus.

Chaque trou 47a, 47b et 47c s'étend depuis son entrée en face intérieure de la paroi d'intrados 16 vers sa sortie en face externe de la paroi d'intrados 16 présente une section courante circulaire.

Comme visible en particulier sur la figure 5, les trous 47a, 47b et 47c sont fortement inclinés par rapport à la paroi d'intrados 16 qu'ils traversent. Plus particulièrement chaque trou est orienté de manière à avoir sa sortie décalée à la fois vers le sommet S et vers le bord de fuite 19 par rapport à son entrée. Comme visible sur la figure 4, chacun de ces trous 47a, 47b et 47c intersecte la face externe de la paroi d'intrados 16 en formant une ellipse d'orientation inclinée par rapport à l'axe AX.

Concernant l'orientation vers le bord de fuite 19, chaque trou 47a, 47b et 47c a une inclinaison par rapport à l'axe AX qui est d'autant plus faible que la série à laquelle il appartient est proche du bord de fuite 19, en vue de dessus selon l'axe EV, i.e. face au sommet S. Concrètement, les trous 47a sont les plus faiblement inclinés par rapport à l'axe AX, révélé par des ellipses de fortes étendues, et les trous 47c sont les plus fortement inclinés par rapport à l'axe AX, révélé par des ellipses de faibles étendues.

Concernant l'orientation vers le sommet S, chacun des trous 47a a une inclinaison vers le sommet S qui est d'autant plus importante qu'il est proche de ce sommet S.

En pratique la force centrifuge, résultant de la rotation du disque de turbine équipé d'une telle aube 12, tend à diriger l'air de refroidissement vers le sommet S. De ce fait, plus un trou 47a est proche du sommet et plus le flux d'air de refroidissement qui le traverse est important, l'air étant soumis à un changement de direction qui est d'autant moins important que le trou dans lequel il s'engouffre est proche du sommet.

L'orientation des trous 47a permet de diffuser de l'air frais issu de la cavité 27 de façon optimisée en couvrant les portions de surfaces d'intrados 16 qui sont sujettes aux températures les plus critiques, notamment la zone de jonction du bord de fuite 19 avec le sommet S où le refroidissement y est accru.

La portion supérieure 34 du conduit amont 26 comporte quatre perturbateurs 48, visibles sur la figure 6, qui sont formés chacun par une rainure de l'élément de noyau délimitant le conduit amont 26 cette rainure délimitant une nervure dépassant de la paroi d'intrados 16 dans le conduit.

Ces perturbateurs 48 sont régulièrement espacé tous les deux trous 44 du bord d'attaque pour perturber l'écoulement fluide au sein du conduit amont 26 de manière à accroître l'efficacité du transfert thermique.

En vue latérale selon un axe perpendiculaire à la fois à l'axe AX et à l'axe EV, chaque perturbateurs 48 est incliné par rapport à l'axe AX, en ayant sa partie en vis-à-vis du bord d'attaque 18 qui est plus proche du sommet S que sa partie en vis-à-vis de la paroi de séparation 28.

La portion supérieure 37 de la cavité centrale 27 comporte cinq perturbateurs 49 qui sont régulièrement espacés les uns des autres en étant situés en partie amont de la cavité centrale. Chacun de ces perturbateurs 49 est formé par une rainure de l'élément de noyau de la cavité centrale 27 pour former une nervure dépassant de la paroi d'intrados 16 dans la cavité centrale 27.

En vue latérale selon un axe perpendiculaire à l'axe AX et EV, ces perturbateurs 49 s'étendent parallèlement à l'axe AX le long de la fraction très amont de la face interne de la paroi d'intrados 16.

La cavité centrale 27 est traversée par des cylindres pleins 51, appelés pontets, qui s'étendent perpendiculairement à la fois à l'axe AX et à l'axe EV depuis la face interne de la paroi d'intrados 16 jusqu'à la face interne de la paroi d'extrados 17. Chaque pontet 51, constitue à la fois un pont de transfert thermique entre la paroi d'intrados qui est directement en contact avec les gaz chauds et la paroi d'extrados, ainsi qu'un perturbateur d'écoulement qui accroît la turbulence pour augmenter l'efficacité de l'échange thermique, et également un raidisseur qui accroit la cohésion entre les parois d'intrados et d'extrados.

Grâce à ces pontets, la cavité centrale 27 peut présenter un volume important sans altérer la tenue mécanique des parois d'intrados 16 et d'extrados 17 délimitant cette cavité centrale 27.

## Revendications

1. Aube de turbine haute pression d'une turbomachine, telle qu'un turbomoteur, comprenant :
- une pale (13) s'étendant selon une direction d'envergure (EV) en se terminant par un sommet (S) et comprenant une paroi d'intrados (16) et une paroi d'extrados (17) réunies en amont (AM) par un bord d'attaque (18) et réunies en aval (AV) par un bord de fuite (19),
- un circuit interne de refroidissement (25) comprenant uniquement un conduit amont (26) et une cavité centrale (27) pour refroidir cette aube par circulation d'air ;
- le conduit amont (26) et la cavité centrale (27) étant alimentés en air de manière distincte ;
l'aube étant **caractérisée en ce que** :
- le conduit amont (26) est dédié au refroidissement du bord d'attaque (18) et de la paroi d'extrados (17) ;
- la cavité centrale (27) est dédiée au refroidissement de la paroi d'intrados (16) et du bord de fuite (19) et est pourvue de pontets (51) reliant chacun la paroi d'intrados (16) à la paroi d'extrados (17), et **en ce qu'**elle comprend un pied (P) prolongé par une plateforme (14) portant la pale (13), dans laquelle le conduit amont (26) et la cavité centrale (27) sont alimentés par deux embouchures (29, 31) de mêmes sections situées en face inférieure (32) du pied (P), dans laquelle le conduit amont (26) rétrécit depuis son embouchure (29) jusqu'à la plateforme (14), et dans laquelle la cavité centrale (27) s'élargit depuis son embouchure (31) jusqu'à la plateforme (14).

2. Aube selon la revendication 1, comportant une série de trous (47a) de refroidissement de son bord de fuite (19) à section circulaire, chaque trou (47a) reliant la cavité centrale (27) avec l'extérieur en traversant la paroi d'intrados (16), en s'étendant depuis une entrée en face intérieure de la paroi d'intrados (16) jusqu'à une sortie en face externe de la paroi d'intrados (16),

3. Aube selon la revendication 2, chaque trou (47a) de refroidissement du bord de fuite (19) étant incliné de telle manière que sa sortie est décalée à la fois vers le sommet (S) et vers le bord de fuite (19) par rapport à son entrée.

4. Aube selon la revendication 2 ou 3, dans laquelle chaque trou (47a) de refroidissement du bord de fuite (19) a une inclinaison qui est d'autant plus importante qu'il est proche de ce sommet (S).

5. Aube selon la revendication 1, dans laquelle le bord d'attaque (18) comporte une série de trous (44) qui relient chacun le conduit amont (26) avec l'extérieur, chaque trou de refroidissement du bord d'attaque (44) étant incliné en comportant une sortie située en face externe du bord d'attaque (18) qui est plus proche du sommet (S) que son entrée située en face interne du bord d'attaque (18).

6. Aube selon la revendication 5, dans laquelle chaque trou (44) de refroidissement du bord d'attaque (18) présente une inclinaison qui est d'autant plus importante qu'il est proche du sommet (S).

7. Aube selon la revendication 1, dans laquelle la paroi d'extrados (17) comporte une série de trous (46) de refroidissement de l'extrados ayant chacun une section qui augmente depuis son entrée située en face intérieure de la paroi d'extrados (17) jusqu'à sa sortie située en face externe de cette paroi d'extrados (17).

8. Aube selon la revendication 7, dans laquelle chaque trou (46) de refroidissement de la paroi d'extrados (17) a une section moyenne d'autant plus importante qu'il est éloigné du sommet (S).

9. Turbine comprenant une aube selon l'une des revendications précédentes

10. Hélicoptère comprenant une turbine selon la revendication 9.

## Patentansprüche

1. Hochdruckturbinenschaufel einer Turbomaschine, wie z. B. eines Turbomotors, umfassend:
- ein Rotorblatt (13), das sich in einer Spannrichtung (EV) erstreckt und mit einer Spitze (S) endet und eine Unterschlagwand (16) und eine Oberschlagwand (17) umfasst, die vorgeschaltet (AM) durch eine Vorderkante (18) und nachgeschaltet (AV) durch eine Hinterkante (19) zusammengeführt sind,
- einen internen Kühlkreislauf (25), der nur einen vorgeschalteten Kanal (26) und einen zentralen Hohlraum (27) zur Kühlung dieser Schaufel durch Luftzirkulation umfasst;
- den vorgeschalteten Kanal (26) und den zentralen Hohlraum (27), die getrennt mit Luft versorgt werden;
wobei die Schaufel **dadurch gekennzeichnet ist, dass**:
- der vorgeschaltete Kanal (26) zur Kühlung der Vorderkante (18) und der Oberschlagwand (17) vorgesehen ist;
- der zentrale Hohlraum (27) zur Kühlung der Unterschlagwand (16) und der Hinterkante (19) vorgesehen ist und mit Brückenstutzen (51) versehen ist, die jeweils die Unterschlagwand (16) mit der Oberschlagwand (17) verbinden, und dass sie einen Fuß (P) umfasst, der durch eine Plattform (14) verlängert wird, die das Rotorblatt (13) trägt, wobei der vorgeschaltete Kanal (26) und der zentrale Hohlraum (27) durch zwei Mündungen (29, 31) mit denselben Querschnitten versorgt werden, die sich an der Unterseite (32) des Fußes (P) befinden, wobei der vorgeschaltete Kanal (26) sich von seiner Mündung (29) bis zu der Plattform (14) verengt, und wobei sich der zentrale Hohlraum (27) von seiner Mündung (31) bis zu der Plattform (14) verbreitert.

2. Schaufel nach Anspruch 1, die eine Reihe von Löchern (47a) zur Kühlung ihrer Hinterkante (19) mit kreisförmigem Querschnitt aufweist, wobei jedes Loch (47a) den zentralen Hohlraum (27) mit der Außenseite verbindet, indem es die Unterschlagwand (16) durchquert und sich von einem Eingang an der Innenseite der Oberschlagwand (16) bis zu einem Ausgang an der Außenseite der Oberschlagwand (16) erstreckt,

3. Schaufel nach Anspruch 2, wobei jedes Kühlloch (47a) der Hinterkante (19) so geneigt ist, dass sein Ausgang sowohl zu der Spitze (S) als auch zu der Hinterkante (19) relativ zu seinem Eingang versetzt ist.

4. Schaufel nach Anspruch 2 oder 3, wobei jedes Kühlloch (47a) der Hinterkante (19) eine Neigung aufweist, die umso größer ist, je näher es dieser Spitze (S) liegt.

5. Schaufel nach Anspruch 1, wobei die Vorderkante (18) eine Reihe von Löchern (44) aufweist, die jeweils den vorgeschalteten Kanal (26) mit der Außenseite verbinden, wobei jedes Kühlloch der Vorderkante (44) geneigt ist und einen Ausgang auf der Außenseite der Vorderkante (18) aufweist, der näher an der Spitze (S) liegt als sein Eingang auf der Innenseite der Vorderkante (18).

6. Schaufel nach Anspruch 5, wobei jedes Kühlloch (44) der Vorderkante (18) eine Neigung aufweist, die umso größer ist, je näher es an der Spitze (S) ist.

7. Schaufel nach Anspruch 1, wobei die Oberschlagwand (17) eine Reihe von Kühllöchern (46) der Unterschlagwand aufweist, die jeweils einen Querschnitt aufweisen, der von ihrem Eingang an der Innenseite der Oberschlagwand (17) bis zu ihrem Ausgang an der Außenseite dieser Oberschlagwand (17) ansteigt.

8. Schaufel nach Anspruch 7, wobei jedes Kühlloch (46) der Oberschlagwand (17) einen umso größeren mittleren Querschnitt aufweist, je weiter es von der Spitze (S) entfernt ist.

9. Turbine, umfassend eine Schaufel nach einem der vorstehenden Ansprüche.

10. Hubschrauber, der eine Turbine nach Anspruch 9 umfasst.

## Claims

1. High-pressure turbine blade of a turbo-machine such as a turbo-engine, comprising:
- an airfoil (13) extending in a span direction (EV), terminating in an apex (S) and comprising a lower surface (16) and an upper surface (17) joined on the upstream side (AM) by a leading edge (18) and on the downstream side (AV) by a trailing edge (19),
- an internal cooling circuit (25) having only an upstream duct (26) and a central chamber (27) for cooling this blade by circulating air;
- the upstream duct (26) and the central chamber (27) being separately supplied with air,
said blade being **characterized in that** :
- the upstream duct (26) cools the leading edge (18) and the upper surface (17);
- the central chamber (27) cools the lower surface (16) and the trailing edge (19) and is provided with bridge elements (51) each interconnecting the lower surface (16) and the upper surface (17),
and **in that** it comprises a root (P) prolonged by a platform (14) supporting the airfoil (13), in which the upstream duct (26) and the central chamber (27) are supplied by two inlets (29, 31) with the same sections located on the lower face (32) of the root (P), in which the upstream duct (26) narrows from its inlet (29) to the platform (14), and in which the central chamber (27) widens from its inlet (31) to the platform (14).

2. Blade according to claim 1, comprising a series of holes (47a) with a circular section for cooling its trailing edge (19), each hole (47a) connecting the central chamber (27) with the exterior through the lower surface (16), extending from an inlet on the internal face of the lower surface (16) to an outlet on the external face of the lower surface (16).

3. Blade according to claim 2, wherein each cooling hole (47a) of the trailing edge (19) is inclined such that its outlet is offset from its inlet towards the apex (S) and towards the trailing edge (19).

4. Blade according to claim 2 or 3, wherein each cooling hole (47a) of the trailing edge (19) is inclined by an angle that becomes larger closer to this apex (S).

5. Blade according to claim 1, wherein the leading edge (18) comprises a series of holes (44) each of which connects the upstream duct (26) with the exterior, each cooling hole (44) of the leading edge being inclined and comprising an outlet located on the external face of the leading edge (18) that is closer to the apex (S) than its inlet located on the internal face of the leading edge (18).

6. Blade according to claim 5, wherein each cooling hole (44) of the leading edge (18) is inclined by an angle that becomes larger closer to this apex (S).

7. Blade according to claim 1, wherein the upper surface (17) comprises a series of cooling holes (46) of the upper surface each having a section that increases from its inlet located on the inner face of the upper surface (17) to its outlet located on the outer face of this upper surface (17).

8. Blade according to claim 7, wherein each cooling hole (46) of the upper surface (17) has an average section that is increasingly large with increasing distance from the apex (S).

9. Turbine comprising a blade according to one of the preceding claims.

10. Helicopter comprising a turbine according to claim 9.
